# FASCICULE DE BREVET EUROPEEN

(11) **EP 0 884 218 B1**
(45) Date de publication et mention de la délivrance du brevet: **17.04.2002**
(21) Numéro de dépôt: 98401349.0
(22) Date de dépôt: 05.06.1998
(51) Int. Cl.: B60R 3/02

(54) **Dispositif de marchepied mobile pour un véhicule automobile**
Bewegbare Trittstufe für ein Fahrzeug
Movable foot step for a vehicle

(30) Priorité: 09.06.1997 FR 9707125
(43) Date de publication de la demande: 16.12.1998
(73) Titulaire: AUTOMOBILES PEUGEOT, 75116 Paris (FR); AUTOMOBILES CITROEN, 92200 Neuilly-sur-Seine (FR)
(72) Inventeur: Verdiere, François, 92150 Suresnes (FR)
(74) Mandataire: Berger, Helmut

(56) Documents cités:
- EP-A- 0 012 336
- EP-A- 0 373 842
- CH-A- 295 882
- DE-U- 8 910 933
- US-A- 3 572 754
- US-A- 3 574 322
- US-A- 3 955 827
- US-A- 5 358 268
- PATENT ABSTRACTS OF JAPAN vol. 10, no. 222 (M-504) [2278], 2 août 1986 & JP 61 060339 A (NISSAN), 28 mars 1986

## Description

La présente invention concerne un dispositif de marchepied mobile permettant de faciliter l'accès à l'habitacle des passagers d'un véhicule automobile, comme révélé dans US-A-5358268 conformément au préambule de la revendication 1.

Un tel dispositif s'applique en particulier à des véhicules du type monospace dont l'accès à l'habitacle est rendu difficile à cause de la hauteur relativement importante du plancher.

On connaît par le document FR-A-2 651 739 un dispositif de marchepied mobile et escamotable selon lequel le marchepied est sélectivement mobile entre une position inactive rétractée et une position active sortie en fonction de la position fermée ou ouverte d'une porte coulissante du véhicule.

Selon ce document antérieur, le marchepied est logé sous la caisse du véhicule, ce qui gène considérablement la garde au sol de celui-ci. En outre, le dispositif mécanique permettant de déplacer sélectivement le marchepied entre sa position rétractée et sa position sortie parallèlement au plan du plancher du véhicule est d'une structure extrêmement complexe et donc onéreux à réaliser.

La présente invention a pour but d'éliminer les inconvénients du dispositif de marchepied ci-dessus connu.

A cet effet, l'invention propose un dispositif de marchepied mobile selon les caractéristiques de la revendication 1; ce dispositif permet de faciliter l'accès à l'habitacle des passagers d'un véhicule automobile au travers d'une baie de porte comportant une porte mobile et comprend des moyens permettant de disposer sélectivement le marchepied dans une position inactive rétractée et dans une position active sortie à laquelle le marche pied fait saillie latéralement en porte-à-faux relativement au plancher du véhicule ; et des moyens de transmission pouvant être actionnés par le mouvement de la porte pour commander les moyens de positionnement du marchepied à la position rétractée ou sortie de celui-ci suivant que la porte est fermée ou ouverte. Le marchepied est monté pivotant autour d'un axe longitudinal sur le longeron correspondant de soubassement de caisse du véhicule et les moyens de positionnement et de transmission permettent l'abaissement du marchepied autour de l'axe de pivotement à sa position sortie ou le relevage du marchepied autour de l'axe de pivotement à sa position rétractée à laquelle le marchepied est logé dans le longeron de façon que sa face latérale externe soit en affleurement avec la face latérale externe du longeron située approximativement en prolongement de la porte fermée, sous celle-ci.

De préférence, les moyens de positionnement du marchepied comprennent une biellette logée dans le longeron suivant un plan sensiblement perpendiculaire à l'axe de pivotement du marchepied, au-dessus de celui-ci et ayant l'une de ses extrémités montée pivotante sur un axe longitudinal solidaire du longeron et son autre extrémité reliée au marchepied et aux moyens de transmission de façon que ces derniers commandent le pivotement de la biellette dans un sens provoquant le basculement du marchepied à sa position sortie ou dans le sens opposé ramenant le marchepied à sa position rétractée.

La biellette est reliée au marchepied par l'intermédiaire d'une patte solidaire du marchepied en s'étendant perpendiculairement à l'axe de pivotement de celui-ci, laquelle patte comprend au moins une lumière dans laquelle est logé un axe longitudinal solidaire de l'autre extrémité précitée de la biellette et relié positivement aux moyens de transmission qui commandent le déplacement de l'axe dans la lumière d'une position à partir de laquelle l'axe exerce sur la patte du marchepied un effort de poussée permettant le basculement du marchepied à sa position sortie à une position de retenue du marchepied en position sortie de celui-ci.

Avantageusement, la patte du marchepied comprend une autre lumière reliée à la lumière précitée sensiblement perpendiculairement à cette dernière et permettant au marchepied de pivoter librement vers le haut relativement à l'axe de l'autre extrémité de la biellette se trouvant en position de retenue du marchepied à sa position sortie.

De plus, les moyens de transmission exercent sur l'axe de l'autre extrémité précitée de la biellette un effort de maintien du marchepied à sa position rétractée lorsque la porte du véhicule est fermée.

L'axe de la biellette circulant dans la lumière précitée est solidaire de l'extrémité inférieure de la biellette et cette lumière occupe une position approximativement verticale lorsque le marchepied est en position rétractée.

Chaque lumière est de préférence curviligne.

Le marchepied est en appui par gravité, à sa position sortie, sur une face latérale de butée du longeron.

De préférence, les moyens de transmission comprennent un levier monté pivotant sur un axe, lui-même monté sur une platine fixée au longeron, et relié positivement à l'autre extrémité de la biellette, et le mouvement d'ouverture de la porte commande le pivotement du levier à une position à laquelle la biellette provoque le basculement du marchepied à sa position sortie et le mouvement de fermeture de la porte commande le pivotement du levier à une position à laquelle la biellette ramène le marchepied en position rétractée.

Le levier pivotant comprend deux parties supérieures distinctes dont l'une fait saillie à travers une ouverture d'un rail inférieur horizontal de guidage d'au moins un galet vertical d'un chariot de déplacement de la porte coulissante de façon qu'en déplaçant la porte à sa position d'ouverture, le galet vertical contacte la partie en saillie du levier pour faire pivoter le levier à sa position de commande du basculement du marchepied à sa position sortie, à laquelle position de commande l'autre partie du levier fait saillie dans le rail de guidage pour permettre au galet vertical, lors du déplacement de la porte à sa position de fermeture, de faire pivoter le levier à sa position de commande du pivotement du marchepied à sa position rétractée.

Le levier pivotant est maintenu en appui par un ressort de rappel, à sa position correspondant à la position rétractée du marchepied ou à celle correspondant à la position sortie du marchepied, contre une butée correspondante, solidaire de la platine fixe.

Le levier pivotant est relié à une extrémité d'un câble de transmission logé dans le longeron et dont l'autre extrémité est reliée à l'axe de la biellette logé dans la lumière de la patte du marchepied.

La patte du marchepied est située de préférence au voisinage de l'une des faces d'extrémité du marchepied perpendiculaires à l'axe de pivotement de celui-ci.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en perspective d'un véhicule automobile montrant le dispositif de marchepied de l'invention en position rétractée et escamotée lorsque l'une des portes coulissantes du véhicule est fermée.

La figure 2 représente le dispositif de marchepied de la figure 1 en position active de sortie lorsque la porte coulissante du véhicule est ouverte.

La figure 3 est une vue en perspective d'une partie d'un rail de guidage inférieur de coulissement de la porte du véhicule des figures 1 et 2 et montrant une partie en saillie d'un levier de moyens de transmission actionné par le mouvement de la porte pour déplacer le dispositif de marchepied de l'invention.

La figure 4 est une vue détaillée en élévation suivant la flèche IV de la figure 3 des moyens de transmission du dispositif de marchepied de l'invention.

La figure 5 est une vue en coupe suivant la ligne V-V de la figure 4.

La figure 6 est une générale vue en perspective du marchepied de l'invention.

La figure 7 est une vue en coupe transversale du dispositif de marchepied de l'invention montrant le marchepied en position inactive rétractée.

La figure 8 est une vue en coupe transversale semblable à celle de la figure 7 et représentant le marchepied en position active de sortie.

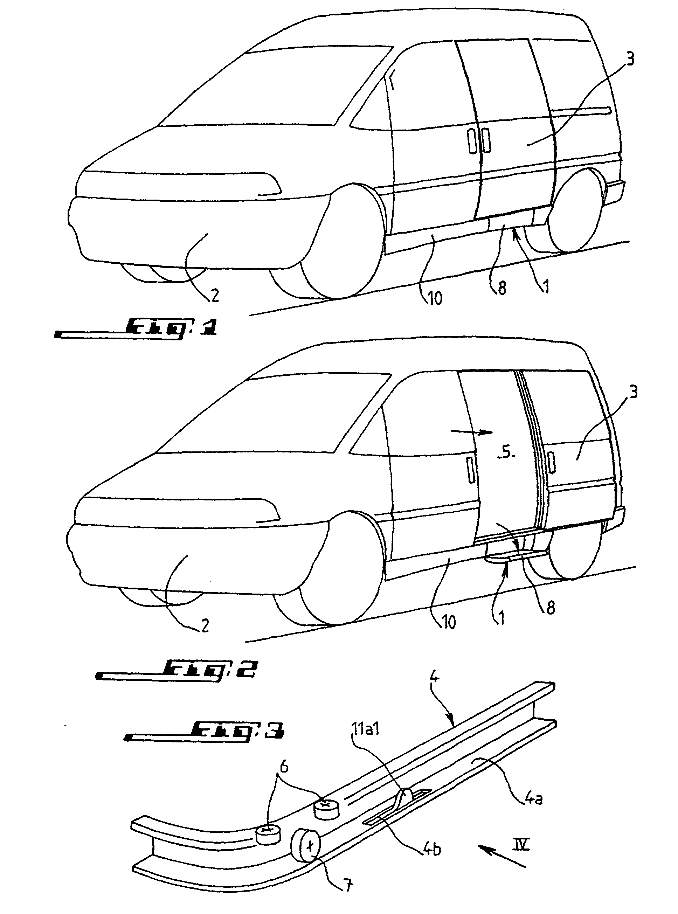

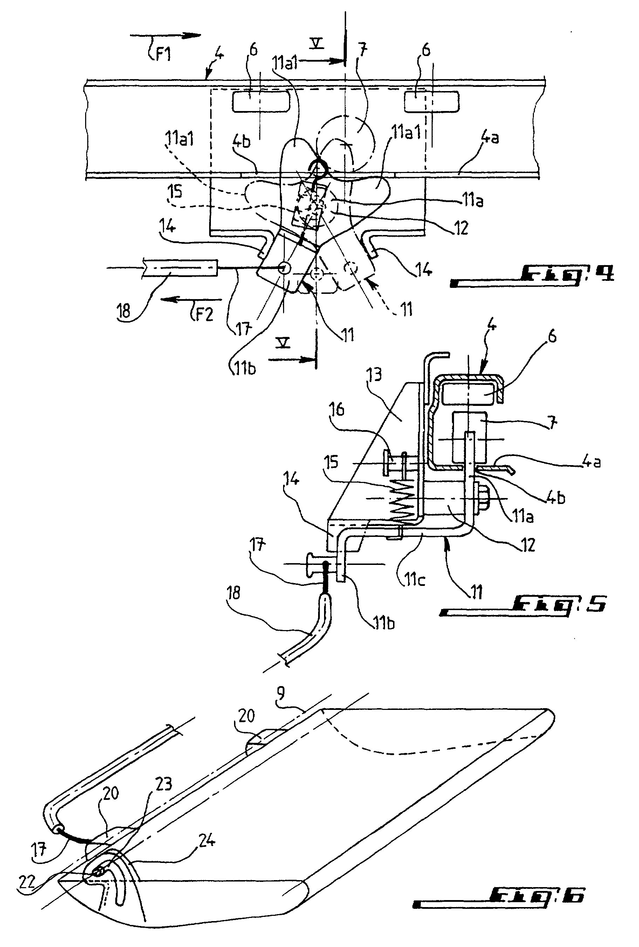

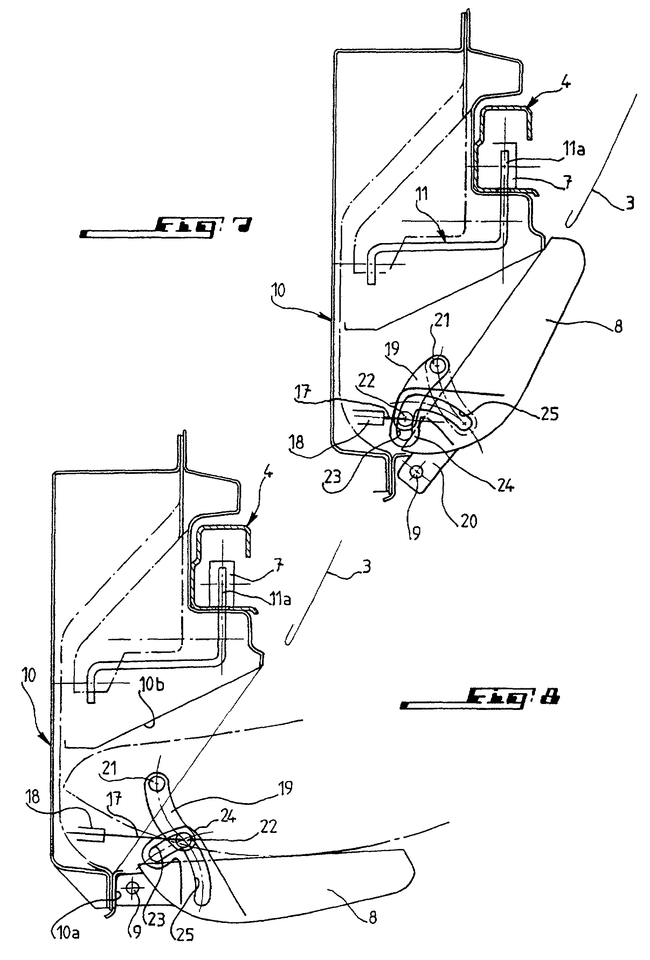

En se reportant aux figures 1 à 3, la référence 1 désigne un dispositif de marchepied mobile pour un véhicule automobile 2, par exemple du type monospace, dont chaque porte latérale arrière 3 est montée coulissante longitudinalement sur deux rails de guidage parallèles supérieur et inférieur, seul le rail de guidage inférieur 4 étant représenté en figure 3. La porte coulissante 3 permet de fermer une baie de porte 5 d'accès à l'habitacle du véhicule. La porte 3 est guidée dans le rail inférieur 4 au moyen d'un chariot (non représenté) comprenant deux galets de guidage horizontaux 6 et un galet vertical 7 circulant dans le rail 4 qui comporte une partie avant courbée prolongée par une partie arrière droite de manière que le chariot puisse plaquer la porte 3 en position de fermeture contre la caisse du véhicule dans le même plan que la porte avant du véhicule et dégager la porte 3 de la caisse en une position permettant son déplacement vers sa position d'ouverture par coulissement le long des rails supérieur et inférieur.

Le dispositif de marchepied permet aux usagers d'accéder facilement à l'habitacle du véhicule et comprend un marchepied 8 disposé entre le sol et le plancher du véhicule et des moyens permettant de disposer sélectivement le marchepied dans une position inactive rétractée comme représenté en figure 1 ou dans une position active sortie à laquelle le marchepied 8 fait saillie latéralement en porte-à-faux relativement au plancher du véhicule, comme représenté en figure 2. Le dispositif de marchepied comprend également des moyens de transmission pouvant être actionnés par le mouvement coulissant de la porte 3 pour commander les moyens de positionnement du marchepied à sa position rétractée ou sortie suivant que la porte est respectivement fermée ou ouverte.

Selon l'invention, et comme cela ressort également des figures 4 à 8, le marchepied 8 est monté pivotant autour d'un axe longitudinal 9 sur le longeron correspondant 10 de soubassement de caisse du véhicule et les moyens de positionnement et de transmission, qui seront définis ultérieurement, permettent le basculement du marchepied 8 autour de l'axe de pivotement 9 à sa position sortie ou à sa position rétractée à laquelle le marchepied est logé dans le longeron 10 de façon que sa face latérale externe, visible de l'extérieur, soit en affleurement avec la face latérale externe du longeron 10 située approximativement en prolongement de la porte fermée 3, sous celle-ci. Ainsi, lorsque le marchepied 8 est escamoté en position rétractée dans le longeron 10 comme représenté en figure 1, le dispositif de marchepied ne gêne pas du tout la garde au sol du véhicule.

Les moyens de transmission comprennent, comme représenté de façon plus détaillée aux figures 4 et 5, un levier 11 monté pivotant sur un axe 12 s'étendant transversalement à l'axe longitudinal du véhicule et solidaire d'une platine 13 fixée au longeron 10. Le levier 11 comprend une partie supérieure 11a montée sur l'axe 12 et s'étendant perpendiculairement à la branche horizontale inférieure 4a du rail 4 en forme de U horizontal et une partie inférieure verticale 11b raccordée à la partie 11a par une partie intermédiaire horizontale 11c. Le levier 11 peut pivoter entre deux positions angulaires délimitées respectivement par deux butées fixes 14 solidaires de la platine 13 et contre chacune desquelles vient en appui la partie 11b du levier 11. La partie supérieure 11a de ce levier comporte deux protubérances identiques 11a1 en forme d'ailettes faisant saillie alternativement au travers d'une ouverture longitudinale 4b réalisée dans la branche inférieure 4a du rail 4 suivant que la porte 3 est en position de fermeture ou d'ouverture de la baie 5. Le levier 11 est maintenu en appui sur l'une ou l'autre des deux butées 14 par un ressort 15 fixé d'une part à un axe 16 solidaire de la platine 13 et d'autre part à la partie intermédiaire de liaison 11c du levier 11. La partie inférieure 11b du levier 11 est reliée à une extrémité d'un câble de transmission 17 se déplaçant dans une gaine fixe 18 logée dans le longeron 10 et dont l'autre extrémité est reliée aux moyens de positionnement comme cela sera décrit ultérieurement.

Lorsque la porte 3 est en position de fermeture, le levier 11 occupe la position représentée en traits mixtes en figure 4 avec l'ailette 11a1 de droite faisant saillie à travers l'ouverture 4b du rail 4. Lorsque la porte 3 est déplacée vers sa position d'ouverture dans le sens indiqué par la flèche F1 en figure 4, le galet vertical 7 du chariot de déplacement de la porte 3, en circulant dans le rail inférieur 4, heurte l'ailette en saillie 11a1 et fait basculer le levier 11 à sa position représentée en trait fort à la figure 4 à laquelle l'ailette de gauche 11a1 fait alors saillie à travers l'ouverture 4b du rail 4. Lors du pivotement du levier 11 vers cette position, son extrémité inférieure 11b exerce sur le câble 17 un effort de poussée dans le sens indiqué par la flèche F2 pour commander les moyens de positionnement de façon que ceux-ci provoquent le basculement du marchepied 8 de sa position rétractée à sa position sortie en porte-à-faux.

En se reportant plus particulièrement aux figures 7 et 8, les moyens de positionnement du marchepied 8 comprennent une biellette 19 de forme arquée, logée dans le longeron 10 suivant un plan sensiblement perpendiculaire à l'axe de pivotement 9 du marchepied 8. Ce dernier comporte, comme cela est également visible en figure 6, deux blocs espacés 20 faisant partie intégrante du marchepied 8 et dans lesquels est engagé l'axe de pivotement 9 de ce marchepied. Les deux blocs 20, en position sortie en porte-à-faux du marchepied 8, viennent en appui contre une face latérale inférieure de butée 10a du longeron 10 de manière à maintenir le marchepied 8 à sa position sortie sensiblement horizontale. La biellette 19, située au-dessus de l'axe de pivotement 9 du marchepied 8, a son extrémité supérieure montée pivotante sur un axe longitudinal 21 solidaire d'une partie du longeron 10 et son extrémité inférieure reliée à la fois au marchepied 8 et au câble 17 des moyens de transmission de façon que le câble 17 puisse commander le pivotement de la biellette 19 autour de l'axe 21 dans un sens provoquant le basculement du marchepied 8 en position sortie ou dans le sens opposé ramenant le marchepied 8 à sa position escamotée. Plus précisément, la biellette 19 comprend un axe 22 solidaire de l'extrémité inférieure de la biellette dans une direction sensiblement longitudinale et engagé dans une lumière curviligne 23 réalisée à travers une patte 24 solidaire du marchepied 8 en s'étendant dans un plan sensiblement transversal à l'axe de pivotement 9 de celui-ci. L'extrémité du câble 17, opposée à celle reliée au levier 11, est fixée à l'axe 22 de la biellette 19. La patte 24, qui est de préférence située à l'une des parois en bout du marchepied 8 perpendiculaire à l'axe de pivotement 9 et à proximité de celui-ci, comprend une autre lumière curviligne 25 se raccordant à la lumière 23 de façon sensiblement perpendiculaire à celle-ci. La lumière 25 permet, lorsque le marchepied 8 occupe sa position sortie en porte-à-faux, un déplacement vers le haut du marchepied 8 relativement à l'axe 22 de la biellette 19 lorsque celle-ci occupe sa position représentée en figure 8. Lorsque la biellette 19 occupe sa position représentée en figure 7 à laquelle le marchepied 8 est escamoté, l'axe 22 est logé dans la lumière 23 approximativement au niveau de sa partie médiane, laquelle lumière 23 occupe une position approximativement verticale. Le levier 11, à sa position représentée en pointillés à la figure 4, exerce par l'intermédiaire du câble 17 et de l'axe 22 un effort de traction sur la patte 24 de façon à maintenir le marchepied 8 en position escamotée dans le longeron 10.

Le fonctionnement du dispositif de marchepied de l'invention ressort déjà en grande partie de la description qui en a été faite ci-dessus et va être maintenant expliqué.

Lorsque la porte coulissante 3 est déplacée de sa position de fermeture à sa position d'ouverture, le galet vertical 7 de son chariot de déplacement provoque le basculement du levier 11 à sa position représentée en trait fort en figure 4 en transmettant au câble 17 un effort de poussée appliqué à l'extrémité inférieure de la biellette 19 qui pivote dans le sens anti-horaire par rapport aux figures 7 et 8 autour de l'axe 21 de façon que l'axe 22 exerce dans la lumière 23 de la patte 24 un effort faisant pivoter ou abaisser le marchepied 8 autour de son axe de pivotement 9 de sa position escamotée de la figure 7 à sa position sortie de la figure 8 à laquelle l'axe 22 se trouve dans la partie de jonction des deux lumières 23 et 25 de façon à maintenir également le marchepied 8 à sa position sensiblement horizontale et permettre éventuellement de relever le marchepied 8 grâce à la lumière 25. On notera que le longeron 10 comporte une partie creuse située en face du marchepied 8 de façon à présenter une paroi arrière inclinée 10b évitant de coincer la chaussure d'un utilisateur lorsque le marchepied 8 occupe sa position active de sortie. Le relevage du marchepied 8 à sa position escamotée dans le longeron 10 s'effectue automatiquement en ramenant la porte coulissante 3 à sa position de fermeture. Pendant ce déplacement de la porte 3, le galet vertical 7 provoque le basculement du levier 11 à sa position représentée en traits mixtes en figure 4 et ce levier exerce sur le câble 17 une traction commandant le pivotement de la biellette 19 dans le sens horaire autour de l'axe 21 de façon à faire pivoter le marchepied 8 à sa position escamotée dans le longeron 10 de la figure 7.

Le dispositif de marchepied de l'invention ci-dessus décrit est actionné par un mécanisme extrêmement simple et n'altère pas l'aspect esthétique d'ensemble du véhicule le comportant.

## Revendications

1. Dispositif de marchepied mobile permettant de faciliter l'accès à l'habitacle des passagers d'un véhicule automobile (2) au travers d'une baie de porte (5) comportant une porte mobile (3) et comprenant des moyens permettant de disposer sélectivement le marchepied (8) dans une position inactive rétractée et dans une position active sortie à laquelle le marchepied (8) fait saillie latéralement en porte-à-faux relativement au plancher de véhicule (2) ; et des moyens de transmission pouvant être actionnés par le mouvement de la porte (3) pour commander les moyens de positionnement du marchepied (8) à la position rétractée ou sortie de celui-ci suivant que la porte (3) est fermée ou ouverte; le marchepied (8) étant monté pivotant autour d'un axe longitudinal (9) sur le longeron correspondant (10) de soubassement de caisse du véhicule et les moyens de positionnement et de transmission permettant l'abaissement du marchepied (8) autour de l'axe de pivotement (9) à sa position sortie ou le relevage du marchepied autour de l'axe de pivotement (9) à sa position rétractée, **caractérisé en ce que** à sa position rétractée le marchepied (8) est logé dans le longeron (10) de façon que sa face latérale externe soit en affleurement avec la face latérale externe du longeron (10) située approximativement en prolongement de la porte fermée, sous celle-ci et **en ce que** les moyens de positionnement du marchepied (8) comprennent une biellette (19) logée dans le longeron (10) suivant un plan sensiblement perpendiculaire à l'axe de pivotement (9) du marchepied (8) au-dessus de celui-ci et ayant l'une de ses extrémités montée pivotante sur un axe longitudinal (21) solidaire du longeron (10) et son autre extrémité reliée au marchepied (8) et aux moyens de transmission de façon que ces derniers commandent le pivotement de la biellette (19) dans un sens provoquant le basculement du marchepied (8) à sa position sortie ou dans le sens opposé ramenant le marchepied (8) à sa position rétractée.

2. Dispositif selon la revendication 1, **caractérisé en ce que** la biellette (19) est reliée au marchepied (8) par l'intermédiaire d'une patte (24) solidaire du marchepied (8) en s'étendant perpendiculairement à l'axe de pivotement (9) de celui-ci et comprenant au moins une lumière (23) dans laquelle est logé un axe longitudinal (22) solidaire de l'autre extrémité de la biellette (19) et relié positivement aux moyens de transmission qui commandent le déplacement de l'axe (22) dans la lumière (23) d'une position à partir de laquelle l'axe (22) exerce sur la patte (24) du marchepied (8) un effort de poussée permettant le basculement du marchepied (8) à sa position sortie à une position de retenue du marchepied en position sortie de celui-ci.

3. Dispositif selon la revendication 2, **caractérisé en ce que** la patte (24) du marchepied (8) comprend une autre lumière (25) reliée à la lumière (23) précitée sensiblement perpendiculairement à cette dernière et permettant au marchepied (8) de pivoter librement vers le haut relativement à l'axe (22) de l'autre extrémité de la biellette (19) se trouvant en position de retenue du marchepied (8) à sa position sortie.

4. Dispositif selon la revendication 2 ou 3, **caractérisé en ce que** les moyens de transmission exercent sur l'axe (22) de l'autre extrémité de la biellette (19) un effort de maintien du marchepied (8) à sa position rétractée lorsque la porte (3) du véhicule (2) est fermée.

5. Dispositif selon l'une des revendications 2 à 4, **caractérisé en ce que** l'axe (22) de la biellette (19) circulant dans la lumière (23) précitée est solidaire de l'extrémité inférieure de la biellette (19) et la lumière (23) occupe une position approximativement verticale lorsque le marchepied (8) est en position rétractée.

6. Dispositif selon l'une des revendications 2 à 5, **caractérisé en ce que** chaque lumière (23, 25) est curviligne.

7. Dispositif selon l'une des revendications précédentes, **caractérisé en ce que** le marchepied (8) est en appui par gravité, en position sortie, sur une face latérale de butée (10a) du longeron (10).

8. Dispositif selon l'une des revendications 1 à 7, **caractérisé en ce que** les moyens de transmission comprennent un levier (11) monté pivotant sur un axe (12) lui-même monté sur une platine (13) fixée au longeron (10) et relié positivement à l'autre extrémité de la biellette (19) et **en ce que** le mouvement d'ouverture de la porte (3) commande le pivotement du levier (11) à une position à laquelle la biellette (19) provoque le basculement du marchepied (8) à sa position sortie et le mouvement de fermeture de la porte (3) commande le pivotement du levier (11) à une position à laquelle la biellette (19) ramène le marchepied (8) en position rétractée.

9. Dispositif selon la revendication 8, **caractérisé en ce que** le levier pivotant (11) comprend deux parties supérieures distinctes (11a1) dont l'une fait saillie à travers une ouverture (4b) d'un rail inférieur horizontal (4) de guidage d'au moins un galet vertical (7) d'un chariot de déplacement de la porte coulissante (3) de façon qu'en déplaçant la porte (3) à sa position d'ouverture, le galet vertical (7) contacte la partie en saillie (11a1) du levier (11) pour faire pivoter le levier (11) à sa position de commande de basculement du marchepied (8) à sa position sortie, à laquelle position de commande l'autre partie (11a1) du levier (11) fait saillie dans le rail de guidage (4) pour permettre au galet vertical (7), lors du déplacement de la porte (3) à sa position de fermeture, de faire pivoter le levier (11) à sa position de commande de pivotement du marchepied (8) à sa position rétractée.

10. Dispositif selon la revendication 8 ou 9, **caractérisé en ce que** le levier pivotant (11) est maintenu, à l'une ou l'autre de ses positions correspondant à la position rétractée ou sortie du marchepied (8), en appui contre une butée correspondante (14), solidaire de la platine fixe (13), par un ressort de rappel (15).

11. Dispositif selon l'une des revendications 8 à 10 considérée en combinaison avec au moins la revendication 2, **caractérisé en ce que** le levier pivotant (11) est relié à une extrémité d'un câble de transmission (17) logé dans le longeron (10) et dont l'autre extrémité est reliée à l'axe (22) de la biellette (19) logé dans la lumière (23) de la patte (24) du marchepied (8).

12. Dispositif selon l'une des revendications 2 à 11, **caractérisé en ce que** la patte (24) du marchepied (8) est située au voisinage de l'une des faces d'extrémités du marchepied (8) perpendiculaires à l'axe de pivotement (9) de celui-ci.

## Patentansprüche

1. Mobile Trittbrettvorrichtung, die es ermöglicht, den Zugang zum Fahrgast-Karosseriegehäuse eines Kraftfahrzeugs (2) durch eine Türöffnung (5) zu erleichtern, umfassend eine mobile Tür (3) und umfassend Mittel, die es erlauben, das Trittbrett (8) selektiv in einer inaktiven eingefahrenen Position und in einer aktiven ausgefahrenen Position anzuordnen, in der das Trittbrett (8) seitlich im Verhältnis zum Boden des Fahrzeugs (2) hervorspringend hervorsteht und Übertragungsmittel, die durch die Bewegung der Tür (3) betätigt werden können, um die Mittel zur Positionierung des Trittbretts (8) in der eingefahrenen oder ausgefahrenen Position desselben zu steuern, je nachdem, ob die Tür (3) geschlossen oder geöffnet ist, **dadurch gekennzeichnet, dass** das Trittbrett (8) schwenkend um eine Längsachse (9) auf dem entsprechenden Längsträger (10) der Unterboden des Karosseriegehäuses des Fahrzeugs angebracht ist und die Positionierungs- und Übertragungsmittel, die das Absenken des Trittbrett (8) um die Schwenkachse (9) in seine ausgefahrene oder hochgeklappte Position oder das Hochklappen des Trittbretts um die Schwenkachse (9) in seine eingefahrene Position erlauben, **dadurch gekennzeichnet, dass** das Trittbrett (8) derart im Längsträger (10) untergebracht ist, dass seine laterale äußere Seite glatt mit der lateralen äußeren Seite des Längsträgers (10) abschneidet, die sich ungefähr in der Verlängerung der geschlossenen Tür unter derselben befindet, und dass die Positionierungsmittel des Trittbretts (8) einen Schwingarm (19) umfassen, der im Längsträger (10) gemäß einer Ebene untergebracht ist, die deutlich senkrecht zur Schwenkachse (9) des Trittbretts (8) oberhalb desselben ist und dessen eines Ende schwenkend auf einer Längsachse (21) angebracht ist, die fest mit dem Längsträger (10) verbunden ist , und dessen anderes Ende mit dem Trittbrett (8) und den Übertragungsmitteln derart verbunden ist, dass diese letzteren das Schwenken des Schwingarms (19) in einer Richtung steuern, die das Kippen des Trittbretts (8) in seine ausgefahrene Position oder in die entgegengesetzte Richtung hervorruft, die das Trittbrett (8) in seine eingefahrene Position zurückbringt.

2. Vorrichtung gemäß Anspruch 1, **dadurch gekennzeichnet, dass** der Schwingarm (19) mit dem Trittbrett (8) mittels einer Klaue (24) verbunden ist, die mit dem Trittbrett (8) fest verbunden ist, wobei sie sich senkrecht zur Schwenkachse (9) desselben erstreckt und wenigstens eine Öffnung (23) umfasst, in der eine Längsachse (22) untergebracht ist, die mit dem anderen Ende des Schwingarms (19) fest verbunden und positiv mit den Übertragungsmitteln verbunden ist, die die Verschiebung der Achse (22) in der Öffnung (23) von einer Position aus steuern, von der aus die Achse (22) auf die Klaue (24) des Trittbretts (8) eine Schubkraft ausübt, die das Kippen des Trittbretts (8) in seine ausgefahrene Position in eine Rückhalteposition des Trittbretts in der ausgefahrenen Position desselben ermöglicht.

3. Vorrichtung gemäß Anspruch 2, **dadurch gekennzeichnet, dass** die Klaue (24) des Trittbretts (8) eine andere Öffnung (25) umfasst, die mit der vorgenannten Öffnung (23) verbunden ist, die deutlich senkrecht zu dieser letzteren ist und es dem Trittbrett (8) erlaubt, im Verhältnis zur Achse (22) des anderen Endes des Schwingarms (19), der sich in der Rückhalteposition des Trittbretts (8) in seiner ausgefahrenen Position befindet, frei nach oben zu schwenken.

4. Vorrichtung gemäß Anspruch 2 oder 3, **dadurch gekennzeichnet, dass** die Übertragungsmittel auf die Achse (22) des anderen Endes des Schwingarms (19) eine Festhaltekraft des Trittbretts (8) in seiner eingezogenen Position ausüben, wenn die Tür (3) des Fahrzeugs (2) geschlossen ist.

5. Vorrichtung gemäß Anspruch 2 bis 4, **dadurch gekennzeichnet, dass** die Achse (22) des Schwingarms (19), der in der vorgenannten Öffnung (23) kreist, fest mit dem unteren Ende des Schwingarms (19) verbunden ist und die Öffnung (23) eine ungefähr vertikale Position einnimmt, wenn das Trittbrett (8) in eingezogener Position ist.

6. Vorrichtung gemäß Anspruch 2 bis 5, **dadurch gekennzeichnet, dass** jede Öffnung (23, 25) gekrümmt ist.

7. Vorrichtung gemäß einem der vorgenannten Ansprüche, **dadurch gekennzeichnet, dass** das Trittbrett (8) in der ausgefahrenen Position auf einer lateralen Anschlagsseite (10a) des Längsträgers (10) durch Schwerkraft aufliegt.

8. Vorrichtung gemäß Anspruch 1 bis 7, **dadurch gekennzeichnet, dass** die Übertragungsmittel einen Hebel (11) umfassen, der schwenkend auf einer Achse (12) angebracht ist, die ihrerseits auf einer Halteplatte (13) angebracht ist, die am Längsträger (10) befestigt und positiv mit dem anderen Ende des Schwingarms (19) verbunden ist und dass die Öffnungsbewegung der Tür (3) das Schwenken des Hebels (11) in eine Position steuert, in der der Schwingarm (19) das Kippen des Trittbretts (8) in seine ausgefahrene Position hervorruft und die Schließbewegung der Tür (3) das Schwenken des Hebels (11) in eine Position hervorruft, in der der Schwingarm (19) das Trittbrett (8) in seine eingefahrene Position zurückbringt.

9. Vorrichtung gemäß Anspruch 8, **dadurch gekennzeichnet, dass** der schwenkende Hebel (11) zwei unterschiedliche obere Teile (11a1) umfasst, von denen einer durch eine Öffnung (4b) einer unteren horizontalen Führungsschiene (4) wenigstens einer vertikalen Walze (7) eines Verschiebungsschlittens der Gleittür (3) derart hervorsteht, dass beim Verschieben der Tür (3) in ihre geöffnete Position die vertikale Walze (7) mit dem hervorstehenden Teil (11a) des Hebels (11) in Kontakt kommt, um den Hebel (11) in seiner Steuerposition zum Kippen des Trittbretts (8) in seine ausgefahrene Position zu bringen, wobei der andere Teil (11a1) des Hebels (11) in vorgenannter Steuerposition in der Führungsschiene (4) hervorsteht, um es der vertikalen Walze (7) beim Verschieben der Tür (3) in ihre geschlossene Position zu erlauben, den Hebel (11) in seiner Steuerposition zum Schwenken des Trittbretts (8) in seine eingefahrene Position schwenken zu lassen.

10. Vorrichtung gemäß Anspruch 8 oder 9, **dadurch gekennzeichnet, dass** der Schwenkhebel (11) in seiner einen oder anderen Position, die der eingefahrenen oder ausgefahrenen Position des Trittbretts (8) entspricht, durch eine Zugfeder (15) aufliegend gegen einen entsprechenden Anschlag (14) gehalten wird, der mit der festen Halteplatte (13) fest verbunden ist.

11. Vorrichtung gemäß Anspruch 8 bis 10, die in Verbindung wenigstens mit Anspruch 2 betrachtet werden, **dadurch gekennzeichnet, dass** der Schwenkhebel (11) an einem Ende eines Übertragungskabels (17) verbunden ist, das in der Längsachse (10) untergebracht ist und dessen anderes Ende mit der Achse (22) des Schwingarms (19) verbunden ist, der in der Öffnung (23) der Klaue (24) des Trittbretts (8) untergebracht ist.

12. Vorrichtung gemäß Anspruch 2 bis 11, **dadurch gekennzeichnet, dass** die Klaue (24) des Trittbretts (8) sich in der Nähe einer der Endseiten des Trittbretts (8) befinden, die senkrecht zur Schwenkachse (9) desselben sind.

## Claims

1. Movable foot step device for facilitating access of passengers to the interior of a motor vehicle (2) through a door opening (5) comprising a movable door (3) and including means for selectively arranging the foot step (8) in a retracted inoperative position and an extended operative position in which the foot step (8) is laterally overhangingly protruding relatively to the vehicle floor (2) ; and transmitting means able to be activated by movement of the door (3) in order to control means for positioning the foot step (8) to the retracted or extented position according to whether the door (3) is closed or open ; the foot step (8) being pivotally mounted about a longitudinal pin (9) onto the corresponding longitudinal girder (10) of the vehicle body substructure, and the positioning and transmitting means enabling to lower the foot step (8) about the pivoting pin (9) to its extented position or to raise the foot step about the pivoting pin (9) to its retracted position, **characterized in that**, in its retracted position, the foot step (8) is housed in the longitudinal girder (10) so that its outer lateral face is flush with the outer lateral face of the longitudinal girder (10) located approxitamely in an extension of the door as closed, under the same, and **in that** the means for positioning the foot step (8) comprise a connecting rod (19) housed in the longitudinal girder (10) according to a plane which is substantially perpendicular to the pin (9) for pivoting the foot step (8) above the same and having one of its ends which is pivotally mounted on a longitudinal pin (21) rigidly connected with the longitudinal girder (10) and its other end connected to the foot step (8) and to the transmitting means so that the latter will control pivoting the connecting rod (19) in a direction causing the foot step (8) to rotate in its extended position or in the opposite direction returning the foot step (8) to its retracted position.

2. Device according to claim 1, **characterized in that** the connecting rod (19) is connected to the foot step (8) by means of a tab (24) rigidly connected with the foot step (8) by extending perpendicularly to the pivoting pin (9) thereof and comprising at least one aperture (23) in which a longitudinal pin (22) rigidly connected with the other end of the connecting rod (19) is housed and positively connected to the transmitting means which control displacement of the pin (22) in the aperture (23) from a position in which the pin (22) brings a pushing effort onto the tab (24) of the foot step (8) for rotating the foot step (8) to its extended position to a position for retaining the foot step in the extended position thereof.

3. Device according to claim 2, **characterized in that** the tab (24) of the foot step (8) comprises another aperture (25) connected to the above mentioned aperture (23) substantially perpendicular thereto and enabling the foot step (8) to freely pivot upwardly with relatively to the pin (22) of the other end of the connecting rod (19) which is in the position for retaining the foot step (8) in its extended position.

4. Device according to claim 2 or 3, **characterized in that** the transmitting means bring, on the pin (22) of the other end of the connecting rod (19), an effort for maintening the foot step (8) in its retracted position when the door (3) of the vehicle (2) is closed.

5. Device according to one of claims 2 to 4, **characterized in that** the pin (22) of the connecting rod (19) which circulates in the above mentioned aperture (23) is rigidly connected with the lower end of the connecting rod (19) and the aperture (23) is in a substantially vertical position when the foot step (8) is in the retracted position.

6. Device according to one of claims 2 to 5, **characterized in that** each aperture (23, 25) is curved.

7. Device according to one of the preceeding claims, **characterized in that** the foot step (8) is supported by gravity, in the extended position thereof, on a lateral abutment face (10a) of the longitudinal girder (10).

8. Device according to one of claims 1 to 7, **characterized in that** the transmitting means comprise a lever (11) pivotally mounted on a pin (12) which is itself mounted on a plate (13) secured to the longitudinal girder (10) and positively connected to the other end of the connecting rod (19), and **in that** the movement for opening the door (3) controls pivoting the lever (11) in a position in which the connecting rod (19) makes the foot step (8) to move in its extended position and the movement for closing the door (3) controls pivoting the lever (11) in a position in which the connecting rod (19) brings the foot step (8) back in the retracted position.

9. Device according to claim 8, **characterized in that** the pivoting lever (11) comprises two separate upper parts (11a1) one of which is protruding through an opening (4b) of a lower horizontal rail (4) for guiding at least one vertical roller (7) of a moving carriage for the sliding door (3) so that, by moving the door (3) in its opening position, the vertical roller (7) will engage the protruding part (11a1) of the lever (11) for making the lever (11) to pivot in its position for controlling rotation of the foot step (8) to its extended position, in which control position the other part (11a1) of the lever (11) is protruding in the guiding rail (4) for enabling the vertical roller (7), upon displacement of the door (3) in its closing position, to make the lever (11) to pivot in its control position for pivoting the foot step (8) in its retracted position.

10. Device according to claim 8 or 9, **characterized in that** the pivoting lever (11) is maintained, in either one of its positions corresponding to the retracted or extended position of the foot step (8), as being supported by a corresponding abutment (14) rigidly connected to the fixed plate (13) by means of a return spring (15).

11. Device according to one of claims 8 to 10, considered in combination with at least claim 2, **characterized in that** the pivoting lever (11) is connected to one end of a transmission cable (17) housed in the longitudinal girder (10) and the other end of which is connected to the pin (22) of the connecting rod (19) housed in the aperture (23) of the tab (24) of the foot step (8).

12. Device according to one of claims 2 to 11, **characterized in that** the tab (24) of the foot step (8) is located in vicinity of one of the end faces of the foot step (8) which are perpendicular to the pivoting pin (9) thereof.
